**Europäisches Patentamt**

**European Patent Office**

**Office européen des brevets**

(19)

(11) Publication number : **0 075 931 B2**

(12) # NEW EUROPEAN PATENT SPECIFICATION

(45) Date of publication of the new patent specification : **30.12.92 Bulletin 92/53**

(51) Int. Cl.⁵ : **B60T 17/22, B60T 8/32**

(21) Application number : **82108983.6**

(22) Date of filing : **28.09.82**

(54) **Fail-safe system in a power regulation circuit for an automotive electronic circuit.**

(30) Priority : **29.09.81 JP 152969/81**

(43) Date of publication of application :
**06.04.83 Bulletin 83/14**

(45) Publication of the grant of the patent :
**01.02.89 Bulletin 89/05**

(45) Mention of the opposition decision :
**30.12.92 Bulletin 92/53**

(84) Designated Contracting States :
**DE FR GB**

(56) References cited :
**EP-A- 0 075 932**
**WO-A-79/00691**
**DE-A- 2 728 229**

(56) References cited :
**FR-A- 2 205 430**
**US-A- 3 874 743**
**US-A- 3 893 535**
**US-A- 4 246 566**
**"Modern electronic circuits reference manual" by John Markus, 1980, pp. 1158 and 1159, McGraw Hill, Inc.**

(73) Proprietor : **NISSAN MOTOR CO., LTD.**
**2 Takara-cho, Kanagawa-ku**
**Yokohama-shi Kanagawa-ken 221 (JP)**

(72) Inventor : **Matsuda, Toshiro**
**4688-1, Sobudai 3-chome**
**Zama-shi Kanagawa-ken (JP)**

(74) Representative : **TER MEER - MÜLLER - STEINMEISTER & PARTNER**
**Mauerkircherstrasse 45**
**W-8000 München 80 (DE)**

EP 0 075 931 B2

## Description

Field of Technology

The present invention relates generally to a fail-safe system in a power regulation circuit for an automotive electronic circuit, such as an anti-skid electronic brake control system, for fail-safe control of the electrical voltage to be applied to the electronic circuit.

Prior Art

US-A-3 874 743 discloses a fail-safe system comprising a power regulation circuit and a monitor power supply circuit both being to be connected directly to the power source of a vehicle. The power regulation circuit provides a regulated output voltage and the monitor power supply circuit provides a reference voltage, both voltages being compared by said comparing means. The comparing means provides a disabling signal to an automotive electric circuit as soon as the regulated output voltage differs from the reference voltage.

US-A-4 246 566 discloses a fail-safe system for an automotive electronic circuit which system checks different voltages. As soon as the checked voltage does not keep a predetermined level or as soon as a checked voltage leaves a predetermined range of voltages, a fail-safe signal is provided.

Summary of the Invention

It is an object of the present invention to provide a very reliable fail-safe system in a power regulation circuit for an automotive electronic circuit.

In the inventive system a first voltage dividing means provides a divided regulated voltage and a second voltage dividing means provides during orderly operation of the fail-safe system an upper divided reference voltage being higher than said divided regulated voltage and a lower divided reference voltage being lower that said divided regulated voltage.

The comparing means comprises a first comparing circuit and a second comparing circuit both providing disabling signals as soon as said divided regulated voltage is not within the range between said upper and said lower divided reference voltages, however, said first comparing circuit being supplied with said reference voltage as the supply voltage and said second comparing circuit being supplied with said regulated output voltage as the supply voltage. This means that two comparing circuits making the same comparison are provided whereby, however, the circuits are provided with different supply voltages so that there is a high probability that at least all with one comparing circuit will work orderly.

Brief Description of the Drawings

The present invention will be understood more fully from the detailed description given herebelow and from the accompanying drawings, which, however, should no be taken as limitative to the invention but for elucidation and explanation only.

In the drawings:

Fig. 1 is a schematic block diagram of a fail-safe system in a power regulation circuit of an electronic anti-skid brake control system; and

Fig. 2 is a circuit diagram of a fail-safe system of the invention.

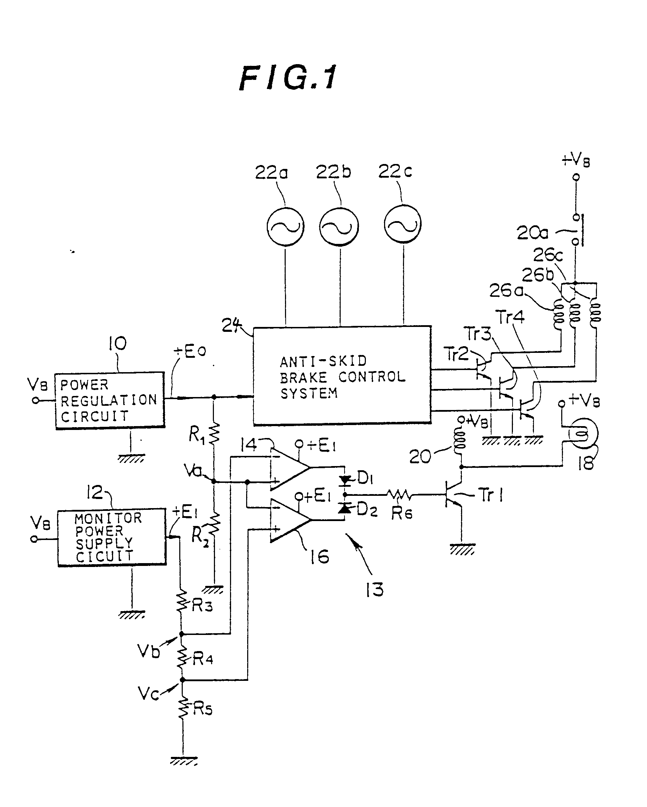

Referring now to the drawings, particularly to Fig. 1, there is illuminated a fail-safe system in a power regulation circuit. The power regulation circuit 10 is connected to an electronic anti-skid control system 24 to supply a given constant voltage of electrical power to the latter. The anti-skid control system 24 is connected to wheel r.p.m. sensors 22a, 22b and 22c to receive sensor signals respectively representative of driving and driven wheel speeds. Based on the sensor signals, the anti-skid control system 24 activates and deactivates electromagnetic actuators 26a, 26b and 26c through transistors $Tr_2$, $Tr_3$ and $Tr_4$. The electromagnetic actuators 26a, 26b and 26c control application and release of wheel cylinders in a hydraulic brake system for preventing vehicle wheels from skidding. The electromagnetic actuators 26a, 26b and 26c are connected to a power source, i.e. a vehicle battery via a relay switch 20a.

The power regulation circuit 10 is also connected to a fail-safe circuit 13. To the fail-safe circuit 13 is also connected a monitor power supply circuit 12 which is, in turn, connected to the vehicle battery acting as a power source $V_B$. The fail-safe circuit 13 includes a pair of comparators 14 and 16. The positive input terminal (+) of the comparator 14 is connected to the power regulation circuit 10 via dividing resistor $R_1$ and to ground via dividing resistor $R_2$. Likewise, the negative input terminal (-) of the comparator 16 is connected to the power regulation circuit 10 and ground via the dividing resistors $R_1$ and $R_2$ respectively. The positive input terminal (+) of the comparator 14 and the negative input terminal (-) of the comparator 16 thus receive the divided voltage $V_a$. Here, assuming the resistance values of the dividing resistors $R_1$ and $R_2$ are respectively $r_1$ and $r_2$, and the output voltage of the power regulation circuit 10 is $E_0$, the imput voltage $V_a$ to the comparator 14 and 16 from the power regulation can be calculated by the following equation:

$$V_a = \frac{r_2}{r_1 + r_2} \times E_o$$

On the other hand, the negative input terminal (-) of the comparator 14 is connected to the monitor power supply circuit 13 via dividing resistor $R_3$, and to

ground via dividing resistors, $R_4$ and $R_5$. The positive input terminal (+) of comparator 16 is also connected to the monitor power supply circuit 12 via the dividing resistors $R_3$ and $R_4$ and to ground via dividing resistor $R_5$. The input voltages $V_b$ and $V_c$ respectively applied to the comparators 14 and 16 can be respectively expressed by the following equations:

$$V_b = \frac{r_4 + r_5}{r_3 + r_4 + r_5} \times E_1$$

$$V_c = \frac{r_5}{r_3 + r_4 + r_5} \times E_1$$

where $r_3$ is resistance value of resistor $R_3$
$r_4$ is resistance value of resistor $R_4$
$r_5$ is resistance value of the resistor $R_6$
$E_1$ is output voltage of the monitor power supply circuit.

Here, as seen from Fig. 1, the comparators 14 and 16 are energized with voltage $E_1$ from the monitor power supply circuit 12.

Therefore, the comparator 14 is adapted to produce a HIGH level comparator signal when the signal voltage $V_a$ is larger than that of $V_b$. On the other hand, the comparator 16 is adapted to produce a HIGH level comparator signal when the signal voltage $V_a$ is smaller than that of $V_c$. The output terminals of the comparators 14 and 16 are respectively connected to a base electrode of a transistor Tr via respective diodes $D_1$ and $D_2$ and a common resistor $R_6$. The collector electrode of the transistor $Tr_1$ is connected to a fault indicator lamp 18 and, in turn, to a relay coil 20 which serves as a collector load.

The anti-skid brake control system is constructed in per se known circuit construction as disclosed in US-A-3,744,851, for example. Other anti-skid control systems have been disclosed in British Patent Pre-publications GB-A-2,061,435, GB-A-2,062,786 and GB-A-2,066,894. The disclosures in the above-referred publications are hereby incorporated by reference. As is well known, the electronic anti-skid control system generally controls application and release of brake pressure in the wheel cylinder in order to control tread/road friction to near the maximum value. The anti-skid control signal to be fed to the electromagnetic actuators 25a, 26b and 26c to control actuation of the fluid pressure in the wheel cylinder of the hydraulic brake system.

As will be appreciated, the anti-skid control system can comprise a digital circuit including CMOS and/or TTL elements, or an analog circuit including an operational amplifier, comparators and so forth. Either of the digital and analog circuits would be influenced by variations in the power regulation circuit output voltage. In the case of a TTL-based anti-skid brake control system, the allowable voltage variation of the power regulation circuit 10 is within the range $5.25V - \alpha < E_0 < 5.25V + \alpha$, where $\alpha$ is the allowable voltage variation of the TTL circuit elements.

When the power regulation circuit 10 is damaged or malfunctions to produce a higher output voltage than normal, the input voltage $V_a$ to the comparators 14 and 16 becomes greater than normal corresponding to the increase of the output voltage of the power regulation circuit. Thus, the input voltage $V_a$ becomes higher then the input voltage $V_b$. The comparator 14 thus produces a HIGH level comparator signal. The HIGH level comparator signal of the comparator 14 is fed to the transistor $Tr_1$ via the diode $D_1$ and the resistor $R_6$. The transistor $Tr_1$ is turned off in response to the HIGH level comparator signal from the comparator 14 to produce a bias voltage at the collector electrode thereof. The bias voltage of the transistor $Tr_1$ is fed to the indicator lamp 18 to turn the latter on. At the same time, the relay coil is energized by the bias voltage of the transistor $Tr_1$ to open the relay switch 20a. As a result, the electromagnetic actuators 26a, 26b and 26c are disconnected from the power source, i.e., from the vehicle battery, to be rendered inactive.

Alternatively, if damage or malfunction of the power regulation circuit 10 causes a significant drop in the output voltage, the input voltage $V_a$ to the positive input terminal of the comparator 14 and the negative input terminal of the comparator 16 becomes lower then normal. This causes the comparator 16 to produce a HIGH level comparator signal to be fed to the transistor $Tr_1$ via the diode $D_2$ and the resistor $R_6$. As in the foregoing case, the transistor $Tr_1$ is cut-off by the HIGH level comparator signal of the comparator 16 to turn on the indicator lamp 18 and energize the relay coil.

As will be appreciated, as long as the power regulation circuit 10 is in the normal state and produces a voltage within the predetermined allowable voltage variation range, the comparator signals of the comparator 14 and 16 are maintained at LOW level to keep the transistor $Tr_1$ ON. In this case, the indicator lamp 18 is maintained OFF and the relay coil 20 is deenergized to allow power supply to the electromagnetic actuators 26a, 26b and 26c to make the anti-skid control system active.

It should be noted that, in order to prevent the fail-safe circuit 13 from malfunctioning due to sudden significantly HIGH voltages, the comparator 14 and 16 must be designed to withstand even substantially HIGH voltages, i.e., voltages exceeding 12V. This will ensure the operation of the fail-safe system of the shown embodiment.

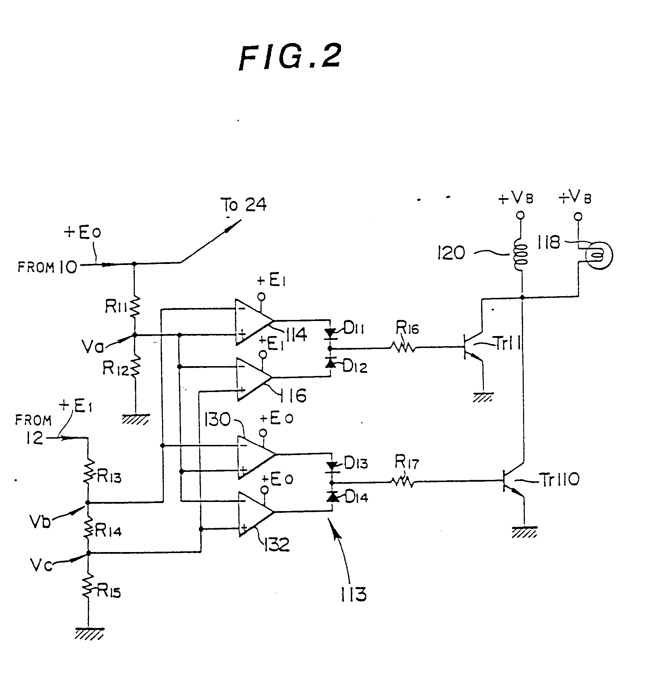

Referring to Fig.2, there is illustrated a fail-safe circuit of the invention This fail-safe circuit 113 comprises two pairs of comparators 114, 116 and 130 and 132. The power regulation circuit 10 and ground are connected to positive input terminals (+) of the comparators 114 and 130 and to negative input terminals (-) of the comparator 116 and 132, via dividing resistor $R_{11}$ and $R_{12}$ respectively. The monitor power supply circuit 12 and ground are connected to the negative input terminal (-) of the comparator 14 and the positive input terminal (+) of the comparator 16 via the dividing resistors $R_{13}$, $R_{14}$ and $R_{15}$. As set forth, the positive input terminal of the comparator 14 and the negative input terminal of the comparator 16 receive divided voltage $V_a$. The negative input terminal of the comparator 14 receives the divided voltage $V_b$ and the positive input terminal of the comparator 16 receives the divided voltage $V_c$. Thus, the comparators 114 and 116 act similarly to the foregoing system on the transistor $Tr_{11}$ via the diodes $D_{11}$ and $D_{12}$ and the common resistor $R_{16}$ when the input voltage $V_a$ from the power regulation circuit 10 is out of a given range defined by the input voltage from the monitor power supply circuit 12 and resistors $R_{13}$, $R_{14}$ and $R_{15}$. The indicator 118 is turned on and the relay coil 120 is energized when the transistor is cut-off. The comparators 114 and 116 receive power from the monitor power supply circuit 12 for operation and, in turn, the comparators 130 and 132 receive power from the power regulation circuit 10.

The comparators 130 and 132 are adapted to monitor the monitor power supply circuit 12 for malfunctions. As with the comparators 114 and 116, the positive input terminal of the comparator 130 and the negative input terminal of the comparator 132 receive divided voltage $V_a$. The negative input terminal of the comparator receives the input voltage $V_b$ from the monitor power supply circuit 12 via the dividing resistors $R_{13}$, $R_{14}$ and $R_5$. Similarly, the divided voltage $V_c$ from the dividing resistors $R_{13}$, $R_{14}$ and $R_{15}$ is applied to the positive input terminal of the comparator 132. The comparator 130 thus compares the input voltages $V_a$ and $V_b$ and produces a HIGH level comparator signal when the input voltage $V_a$ is larger than $V_b$. On the other hand, the comparator 132 is adapted to produce a HIGH level comparator signal when the input voltage $V_a$ is less than $V_c$.

The comparators 130 and 132 are connected to the base electrode of the transistor $Tr_{110}$ via respective diodes $D_{13}$ and $D_{14}$ and a common resistor $R_{17}$. The transistor $Tr_{110}$ is responsive to application of a HIGH level comparator signal via the resistor $R_{17}$ to turn OFF. When the transistor $Tr_{110}$ is applied to the indicator lamp 118 and the relay coil 120. Thus, the indicator lamp 118 is turned ON and the relay coil 120 is energized.

Therefore, in the shown embodiment, the fail-safe circuit 113 monitors not only the output voltage of the power regulation circuit 10 but also the output voltage of the monitor power supply circuit 12.

## Claims

1. A fail-safe system in a power regulation circuit for an automotive electronic circuit comprising
    a power regulation circuit (10) to be connected to a power source ($V_B$) and adapted to provide a regulated output voltage ($E_0$) to said automotive electronic circuit (24),
    first voltage dividing means (R11, R12) connected to the output of the power regulation circuit (10) for providing a divided regulated voltage ($V_a$),
    a monitor power supply circuit (12) to be connected to said power source ($V_B$) and adapted to produce a reference voltage ($E_1$), and
    comparing means (114, 116, 130, 132) for comparing said divided regulated voltage ($V_a$) with said reference voltage ($E_1$) and for providing a disabling signal to said automotive electric circuit (24) as soon as said divided regulated voltage ($V_a$) is not in agreement with the comparison condition, **characterized in that**
    second voltage dividing means (R13, R14, R15) are connected to the output of the monitor power supply circuit ( 12) for providing during orderly operation of the fail-safe system an upper divided reference voltage ($V_b$) being higher than said divided regulated voltage ($V_a$) and a lower divided reference voltage ($V_c$) being lower than said divided regulated voltage ($V_a$), and in that
    said comparing means comprises a first comparing circuit (114, 116) and a second comparing circuit (130, 132) both providing disabling signals as soon as said divided regulated voltage ($V_a$) is not within the range between said upper and said lower divided voltages ($V_b$, $V_c$), however, said first comparing circuit being supplied with said reference voltage ($E_1$) as the supply voltage and said second comparing circuit being supplied with said regulated output voltage ($E_0$) as the supply voltage.

## Patentansprüche

1. Sicherheitseinrichtung für eine Stromversorgungsregelschaltung eines elektronischen Schaltkreises für Fahrzeuge mit
    - einer Stromversorgungsregelschaltung (10), die mit einer Speisequelle ($V_B$) verunden ist und eine geregelte Ausgangsspannung ($E_0$) an den elektronischen Schaltkreis (24) abgibt,
    - einem ersten Spannungsteiler (R11, R12) zur Bereitstellung einer geregelten Teilspannung ($V_a$), der mit dem Ausgang der Stromversorgungsregelschaltung (10) verbunden ist,
    - einer Stromversorgungsüberwachungsschaltung (12), die mit der Speisequelle ($V_B$) verbunden ist und eine Referenzspannung ($E_1$) erzeugt, und
    - einer Vergleichseinrichtung (114, 116, 130, 132) zum Vergleichen der geregelten Teilspannung ($V_a$) mit der Referenzspannung

(E$_1$), welche ein Sperrsignal an den elektronischen Schaltkreis (24) liefert, sobald die geregelte Teilspannung (V$_a$) nicht mehr mit den Vergleichsbedingungen übereinstimmt, **gekennzeichnet durch**

- einen zweiten Spannungsteiler (R13, R14, R15), der mit dem Ausgang der Stromversorgungsüberwachungsschaltung (12) verbunden ist und der bei ordnungsgemäßem Betrieb der Sicherheitseinrichtung eine obere Referenzteilspannung (V$_b$) bereitstellt, die größer als die geregelte Teilspannung (V$_a$) ist, und eine untere Referenzteilspannung (V$_c$) liefert, die geringer ist als die geregelte Teilspannung (V$_a$), und daß

- die Vergleichseinrichtung eine erste Vergleichsschaltung (114, 116) und eine zweite Vergleichsschaltung (130, 132) enthält, die beide Sperrsignale bereitstellen, sobald die geregelte Teilspannung (V$_a$) sich nicht innerhalb des Bereichs zwischen der oberen und unteren Referenzteilspannung (V$_b$, V$_c$) befindet, wobei die erste Vergleichsschaltung mit der Referenzspannung (E$_1$) und die zweite Vergleichsschaltung mit der geregelten Ausgangsspannung (E$_0$) versorgt sind.

## Revendications

1. Système de sécurité dans un circuit de régulation d'alimentation pour un circuit électronique automobile comprenant:
   un circuit de régulation d'alimentation (10) à connecter à une source d'énergie (V$_B$) et apte à produire une tension régulée de sortie (E$_0$), pour ledit circuit électronique d'automobile (24),
   un premier moyen de division de tension (R11, R12) connecté à la sortie du circuit de régulation d'alimentation (10) pour réaliser une tension régulée divisée (V$_a$),
   un circuit d'alimentation en énergie de surveillance (12) connecté à ladite source d'énergie (V$_B$) et apte à produire une tension de référence (E$_1$), et
   un moyen de comparaison (114, 116, 130, 132) pour comparer ladite tension régulée divisée (V$_a$) avec ladite tension de référence (E$_1$) et pour réaliser un signal d'inhibition audit circuit électrique d'automobile (24) dès que ladite tension régulée divisée (V$_a$) ne coïncide pas avec la condition de comparaison, caractérisé en ce que
   un deuxième moyen de division (R13, R14, R15) est relié à la sortie du circuit d'alimentation en énergie de surveillance (12) pour réaliser pendant un fonctionnement régulier du système de sécurité une tension divisée supérieure (V$_b$) qui est plus importante que ladite tension régulée divisée (V$_a$) et une tension divisée inférieure de référence (V$_c$) qui est plus faible que ladite tension régulée divisée (V$_a$) et en ce que
   ledit moyen de comparaison comprend un premier circuit de comparaison (114, 116) et un deuxième circuit de comparaison (130, 132), tous deux produisant des signaux d'inhibition dès que ladite tension régulée divisée (V$_a$) n'est pas dans la plage entre lesdites tensions divisées supérieure et inférieure (V$_b$, V$_c$) cependant, ledit premier circuit de comparaison recevant ladite tension de référence (E$_1$) en tant que tension d'alimentation et ladite deuxième circuit de comparaison recevant ladite tension régulée de sortie (E$_0$) en tant que tension d'alimentation.

# FIG.1

# FIG.2